# EUROPEAN PATENT APPLICATION

(11) **EP 4 785 832 A1**
(43) Date of publication of application: **05.08.2026**
(21) Application number: 26155106.3
(22) Date of filing: 29.01.2026
(51) Int. Cl.: A47J 27/08, A47J 27/14

(54) **LID SAFETY CLOSURE SYSTEM FOR PRESSURE COOKING CHAMBERS**

(30) Priority: 31.01.2025 IT 202500001752
(71) Applicant: Baratta S.r.l., 55054 Massarosa (IT)
(72) Inventor: BARATTA, Giovannino, 55042 FORTE DEI MARMI (IT)
(74) Representative: Giraldi, Elisa

(57) **Abstract**

A safety closure system for a pressure-cooking chamber comprises a cooking chamber, open at the top, a lid engageable with the mouth of the cooking chamber for the closure thereof, and an annular seal associated with said lid to ensure a steam-tight seal between the cooking chamber and the lid. The safety closure system comprises a plurality of first closing elements provided on the lid and a corresponding plurality of second closing elements arranged on the annular edge of the mouth of the cooking chamber, in which the first closing elements are movable between a first free position thereof, in which they are spaced apart from the second closing elements and allow the lid to open, and a second engaged position thereof, in which they cooperate and are held in position by the second closing elements, and in which the first and second closing elements, when the first elements are in the second engaged position thereof, hold the lid in position on the cooking chamber and compress the seal, compensating any planarity deviations between the cooking chamber and the lid.

## Description

### FIELD OF THE INVENTION

The present invention relates to a safety closure system of a lid for pressure cooking chambers, designed to ensure an airtight, safe and easy-to-use closure, thus improving efficiency and safety during cooking processes.

### BACKGROUND ART

In the prior art, it is known to provide pressure cooking chambers; however, the known solutions do not have adequate safety systems.

### SUMMARY OF THE INVENTION

The object of the invention has been fully achieved by a safety closure system, as defined in claim 1.

A safety closure system for a pressure-cooking chamber, comprising a cooking chamber, open at the top, a lid engageable with the mouth of the cooking chamber for the closure thereof, and an annular seal associated with said lid to ensure a steam-tight seal between the cooking chamber and the lid. The safety closure system comprises a plurality of first closing elements provided on the lid and a corresponding plurality of second closing elements arranged on the annular edge of the mouth of the cooking chamber, in which the first closing elements are movable between a first free position thereof, in which they are spaced apart from the second closing elements and allow the lid to open, and a second engaged position thereof, in which they cooperate and are held in position by the second closing elements, and in which the first and second closing elements, when the first elements are in the second engaged position thereof, hold the lid in position on the cooking chamber and compress the seal, compensating any planarity deviations between the cooking chamber and the lid.

The lid has a layered structure and comprises a wheel, integrally carrying the first closing elements.

The first closing elements are locking pins arranged so as to radially protrude from said wheel, and said wheel is configured to rotate with respect to the other fixed elements of the lid to move the locking pins between the first free position thereof and the second engaged position thereof, and vice versa.

The locking pins extend radially outward from the lid, from a circular crown of the wheel and are spaced apart from one another with an angular distance defined according to the diameter of the lid.

The lid comprises a circular crown defining a sliding profile, which facilitates the rotation of the wheel, thus reducing friction during the rotation of the wheel.

In an alternative embodiment, the lid has a layered structure and comprises a cam actuated by an actuation lever that moves said first closing elements between the first free position thereof, and the second engaged position thereof, and vice versa. In this case, the first closing elements are locking pins, which may be moved linearly by means of said cam between the first free position thereof and the second engaged position thereof, and vice versa.

The locking pins are linearly movable between the first free position, in which they are retracted and do not protrude from the lid, and a second engaged position, in which they interact with said second closing elements provided on the annular edge of the mouth of the cooking chamber and prevent the lid from opening.

The second closing elements provided on the annular edge of the mouth of the cooking chamber are bearings mounted on pressure-adjustment columns.

The bearings are adapted to keep the first closing elements in the engaged position thereof and prevent the lid from opening.

### BRIEF DESCRIPTION OF THE FIGURES

In the following description, reference will be made to the drawings shown in the accompanying figures, in which:
- Figure 1 shows a perspective view of a cooking chamber with the lid in the closed position, in which the outer structure and the lid lifting mechanism are also shown;
- Figure 2(a) shows an exploded view of the lid and a detail of the cooking chamber, and Figure 2(b) shows an exploded view of a closing element present on the annular edge of the cooking chamber;
- Figure 3 shows the three different relative positions of the closing elements,
- Figure 4 shows some implementation details of the lid partially mounted on the cooking chamber in Figure 1;
- Figure 5 and Figure 6 illustrate a top view and two sections of the lid in the mounted state thereof; and
- Figures 7,8 and 9 show a different embodiment of the lid.

The parts according to the present description have been depicted in the drawings, where appropriate, with traditional symbols, showing only those specific details that are relevant for the understanding of the embodiments of the present invention, so as not to highlight details, which will be immediately apparent, to those skilled in the art, with reference to the description stated herein.

### DETAILED DESCRIPTION OF THE INVENTION

The solution according to the present invention will now be described with the aid of the drawings.

Pressurized cooking chambers are commonly used in industrial and domestic settings to accelerate cooking processes and improve the quality of food.

However, the conventional closing systems may be complex, subject to wear and potentially hazardous in the event of malfunctions.

This solution proposes a safety closure system of a lid for pressure cooking chambers, which overcomes these issues by means of an advanced closure system, provided with integrated safety mechanisms.

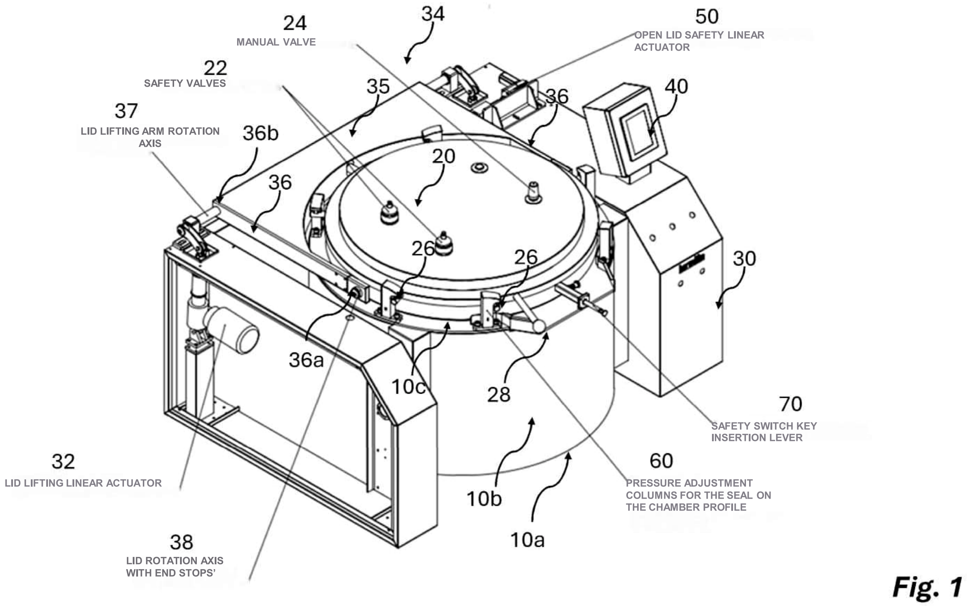

Figure 1 shows an industrial cooking chamber for vacuum cooking of food.

An industrial cooking chamber is a device used for heat-treating large quantities of food. Designed to meet large-scale production needs, it allows cooking, boiling, braising or sterilizing in an efficient and controlled manner, ensuring more uniform cooking and compliance with hygiene standards.

The cooking chamber is made of stainless steel AISI 304 or AISI 316, which is resistant to corrosion and compliant with food standards.

It is typically available in different capacities, generally varying between 100 and 2000 liters, depending on the production needs.

The walls and the bottom of the chamber are thermally insulated to minimize heat loss and optimize energy efficiency.

It may be powered by steam, electric heating elements or direct gas, depending on the user's specific requirements.

The chamber bottom is often provided with a thermal jacket for uniform heat distribution.

Integrated temperature sensors are present to ensure precise and constant control of the cooking process.

The chamber is provided with motorized agitators or paddles designed to gently or vigorously mix the contents, ensuring uniform cooking and preventing the formation of lumps or the sticking to the bottom, and they have an adjustable speed to adapt to different food types.

The lid is airtight for pressure cooking, provided with high thermal-resistant silicone seals.

Safety valves are present for releasing excess pressure.

An opening system is provided to facilitate opening, operable by hydraulic or mechanical systems.

Discharge outlets may be provided positioned on the bottom or on the side, designed to facilitate the emptying of the chamber without residues.

A digital or touch screen control panel is also provided to allow complete control of the cooking parameters (temperature, pressure, time, agitation speed of the mixers). The panel is programmable to store recipes and production processes.

The chamber comprises smooth internal surfaces free of protruding welds, to facilitate cleaning and prevent contamination, and rounded corners to avoid the accumulation of residues.

Given the dimensions of the chamber, elevated efficiency is achieved due to the high production capacity, with optimized energy consumption.

Naturally, excellent versatility will also be achieved as the chamber is adapted for a wide range of products, such as soups, sauces, jams, creams and dairy products.

The solution proposed herein aims to increase safety. In fact, the chamber is provided with advanced safety closure systems to prevent accidents relating to high pressure or temperatures.

Industrial cooking chambers are primarily used in sectors of the food industry for preparing packaged foods, preserves, sauces and bakery products, and for collective catering: for large-scale production of ready meals.

Due to their reliability, versatility and safety, industrial cooking chambers represent an indispensable solution for any production facility requiring efficient, high-quality heat treatments.

With reference to Figure 1, a cooking chamber 10 is provided with a lid 20 and is housed in an outer structure 30 provided with a lid opening mechanism 34 and a control panel 40.

The chamber 10 comprises a base portion 10a, a side wall 10b extending from the base portion, and, at the top, an annular surface 10c surrounding and defining a mouth.

The chamber 10 defines a substantially cylindrical-shaped container or receptacle, open at the top (with reference to the drawings and the operating conditions of the cooking chamber).

The lid 20 is adapted to close the mouth of the chamber 10 and the outer structure 30 is provided with an opening mechanism 34 to facilitate the movement of the lid 20 between the open position, which leaves the mouth of the chamber 10 exposed, and the closed position, which seals the mouth of the chamber 10 by virtue of the lid 20.

The lid 20 is hinged to the outer structure 30 by means of an opening mechanism 34.

The opening mechanism 34 comprises two support arms 36, connected to each other by a support portion 35. Each arm 36 is connected to the lid and supported by the outer structure 30. The arms 36 are rotatably mounted to allow the opening of the lid 20.

In particular, the arms 36 are connected at a first end 36a thereof to the lid 20 and at the opposite end 36b thereof to the outer structure 30 and they are free to rotate about a rotation axis 37. The opening mechanism 34 is actuated by a linear actuator 32 for lifting the lid 20. Alternatively, the opening mechanism 34 may be operated manually.

The lid 20 is free to rotate about a rotation axis 38 passing in the connection point between the first end 36a of the arms 36 and the lid 20.

This degree of freedom allows facilitating the opening of the lid 20, which may tilt about the axis 38; stops are present that allow the lid 20 to remain integral with the arms and block the rotation, e.g., during the cleaning step to prevent the lid 20 from moving.

Safety valves 22 and a manual valve 24 are present on the upper portion of the lid 20 for venting the steam.

A safety linear actuator 50 is provided for the open lid on the outer structure 30 to keep the lid locked when it is in the open state.

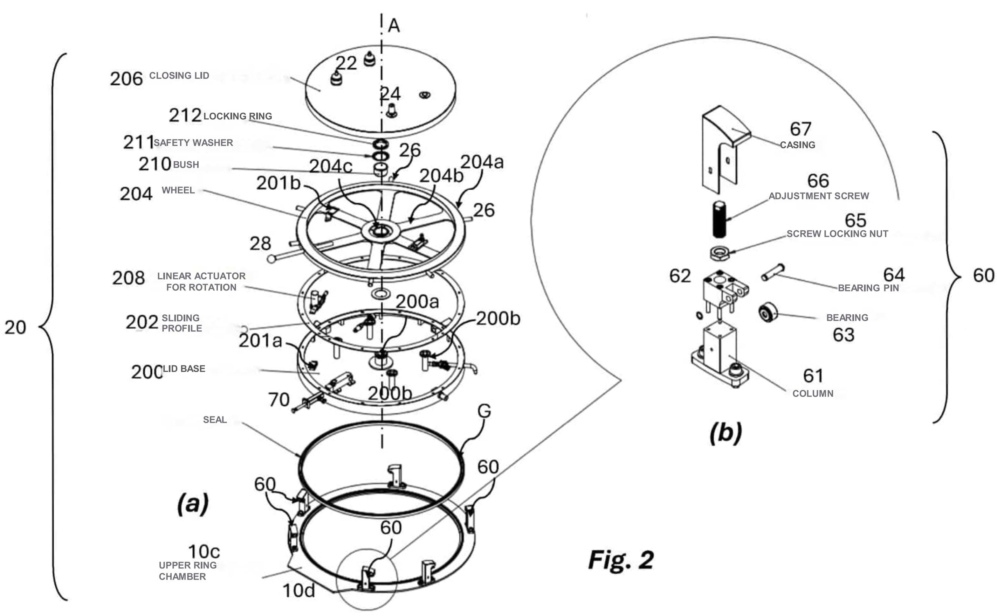

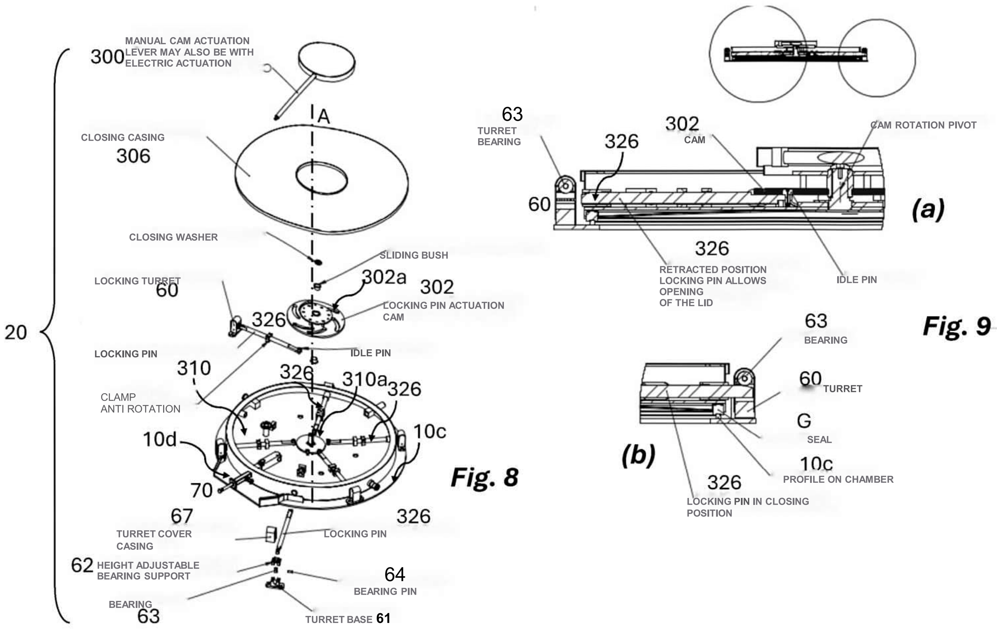

The lid 20 may have different embodiments, and Figure 2 shows a first embodiment, while Figure 8 shows a second alternative embodiment.

As better described in detail with reference to Figure 2, the lid 20 has a complex layered structure comprising different parts and a sealing gasket G.

The sealing gasket G may be made of food-grade silicone material.

Figure 2 shows a first embodiment of the lid 20 according to the present invention.

Figure 2(a) shows an exploded view of the elements forming the lid 20 according to the first embodiment of the present invention.

The lid 20 comprises, from the bottom, a discoid-shaped bottom base 200, a circular crown 202 defining a sliding profile, a wheel 204 with spokes 204b, and an upper closing disc 206. All the elements are concentric and centrally constrained by means of a centering pin 200a.

The discoidal-shaped bottom base 200, the circular crown 202 defining the sliding profile, and the upper closing disc 206 are fixed and integral with one another, while the wheel 204 may rotate about the central axis A of the lid 20 passing through the centering pin 200a, or it may move with respect to the other fixed elements.

The discoid bottom base 200 comprises, on the lower surface thereof (with reference to the drawings), namely the surface facing the chamber 10 in the state of use, an annular seat, not shown, defining a circumferential groove for receiving the sealing gasket G therein.

The bottom base 200 is a discoidal surface defining a fixed portion on which the circular crown 202 is set, defining a sliding profile.

The circular crown 202 defining a sliding profile is made, for example, of a Teflon-type material having a friction coefficient among the lowest currently known.

The bottom base 200 and the circular crown 202 are mounted so as to be concentric by means of the centering pin 200a.

The centering pin 200a is provided on the bottom base 200 for centering and locking the various elements forming the lid, which also defines the axis A of the lid 20.

A mount 201a is provided on the bottom base 200 for a linear actuator 208 for rotating the wheel 204 with respect to the circular sliding crown 202.

Symmetrically, a mount 201b is present on the wheel 204 for said linear actuator 208.

The wheel 204 comprises an outer ring 204a adapted to rotate on the circular sliding crown 202, spokes 204b connecting the outer ring 204a to a central hub 204c. The central hub 204c is inserted onto the centering pin 200a during the assembly of the lid 20.

The spokes 204b are spaced apart from one another, and, a manual lever 28 is provided at one spoke for manually controlling the rotation of the wheel 204.

The manual lever 28 is integral with the wheel 204 and the actuation thereof allows the wheel 204 to rotate with respect to the other elements of the lid and, by virtue of the sliding circular crown 202, friction is reduced to a minimum.

Locking pins 26 are provided on the side edge of the outer ring 204a, forming a first part of the safety closure system, namely the first closing elements.

Safety valves 22 and the manual valve 24 are present on the upper closing disc 206 for venting the steam.

The safety valves 22 and the manual valve 24 for venting the steam are placed in fluid communication with the interior of the cooking chamber 10 by means of corresponding through holes 200b which pass through the entire body of the lid 20 and open out onto the bottom base 200.

All the elements forming the lid 20 are held together with one another by virtue of connection elements comprising, for example, a bush 210, a safety washer 211 and a locking ring 212, in which said connection elements are adapted to cooperate with the centering pin 200a.

Obviously, further connection elements, such as bearings or sealing gaskets, may be provided.

Again with reference to Figure 2, the locking pins 26 made on the wheel 204 are the first closing elements and they are adapted to cooperate with respective locking elements provided on the edge of the annular surface 10c of the mouth of the chamber 10, forming the second closing elements.

The annular surface 10c of the mouth of the chamber 10 has a flat protruding portion 10d that serves as a gripping portion for manually lifting the lid 20.

The solution described herein provides arranging adjustment columns or turrets 60 on the annular profile of the mouth of the chamber 10, which are adapted to control the pressure on the seal G, so as to compensate any planarity deviations between the chamber 10 and the lid 20.

The lid 20 comprises a plurality of locking pins 26 radially extending outward from the structure of the lid 20 and they are provided on the circular crown 204a of the wheel 204 with an angular distance therebetween.

Depending on the size of the lid (namely, on the diameter thereof), four, six, eight, or a number N of locking pins 26 may be present. Such locking pins 26 are adapted to cooperate with said pressure adjustment columns 60.

The lid 20 further provides a manual lever 28 for actuating the locking pins 26, to move them by means of a rotation of the wheel 204 from a first free position and a second engaged position, in which the locking pins 26 ensure greater closing safety by making the seal adhere more to the profile of the mouth of the chamber 10, to compensate and reduce any planarity deviations between the chamber 10 and the lid 20.

The manual lever 28 is integral with the wheel 204 and allows a rotation of the wheel 204 with respect to the other fixed elements. This rotation moves the locking pins 26, integral with the wheel 204, from the first free position to the second engaged position.

Otherwise, the locking pins 26 may be activated and brought into the second engaged position thereof by an actuator 208.

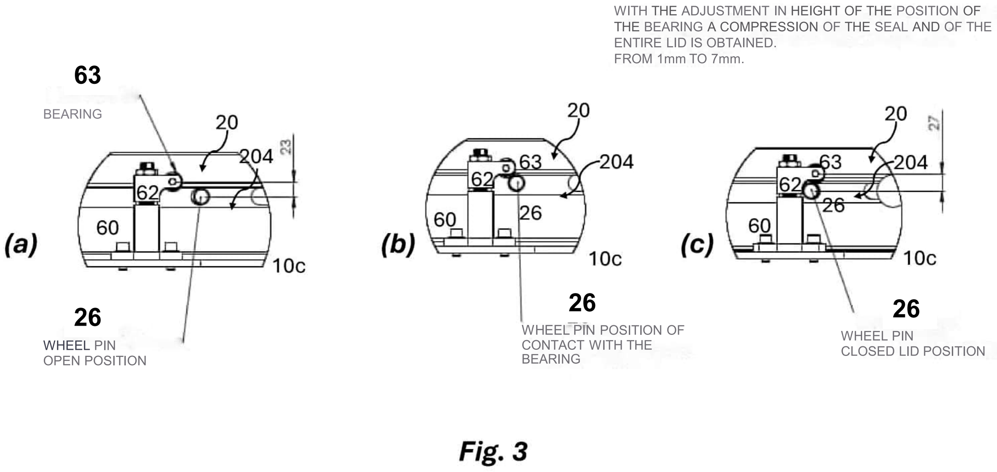

Figure 3 shows three different relative positions for the locking pins 26 and the pressure adjustment columns 60.

In particular, Figure 3(a) shows the first free position, Figure 3(b) shows the state of contact between a locking pin 26 and the corresponding pressure adjustment column 60, and finally, Figure 3(c) shows the second engaged position.

The exploded view of a pressure adjustment column 60 is shown with reference to Figure 2(b).

With reference to Figure 2(a), it is possible to see that the pressure adjustment columns 60 are spaced apart and distributed in a manner corresponding to the locking pins 26 present on the wheel 204.

The column 60 comprises a column base 61, which is anchored and integral with the annular profile 10c of the mouth of the chamber 10, and a support housing 62 for a bearing 63.

The bearing 63 is accommodated in the support housing 62 and supported by means of a bearing pin 64. The distance between the column base 61 and the support housing 62 is adjustable in height by means of an adjustment screw 66 and a screw locking nut 65. A protective casing 67 is provided, which covers and protects the pressure adjustment column 60.

In particular, Figure 3(a) shows the first free position, in which the locking pin 26 is positioned close to the pressure adjustment column 60, but not in contact therewith and is free to move both in the horizontal direction (defined by the plane of the wheel 204) and in the vertical plane perpendicular to the plane of the wheel 204. In such a state, the lid 20 may be open and the locking pins 26 are in the first free position thereof.

Figure 3(b) shows the state of contact between the locking pin 26 and the corresponding pressure adjustment column 60. This is an intermediate position between the open position and the engaged position of the first locking elements.

Finally, Figure 3(c) shows the second engaged position, in which the locking pin 26 has passed over the bearing 63 and is held in the engaged position thereby, ensuring the compression of the seal G and a greater tightness of the lid 20 on the cooking chamber 10, compensating any planarity deviations between the chamber 10 and the lid 20. In this position, the locking pin 26 is kept pressed by the bearing 63 in the support housing 62 and any increases in pressure inside the cooking chamber 10 are counteracted by the opposing force exerted by the bearing 63 on the locking pin 26. Thereby, undesired openings of the lid or sealing leaks of the gasket G are avoided.

With the adjustment in height of the position of the bearing 63 given by the adjustment screw 66, a compression of the seal G and the entire lid 20 is obtained. Figure 3 shows the different relative positions of the two closing elements forming the safety closure system, namely the locking pins 26 and the bearing 63 supported by the pressure adjustment column 60.

This type of adjustment at multiple points, as many as the locking pins 26 provided on the lid 20 and the corresponding columns 60 provided on the circumferential edge of the mouth of the chamber 10, allows compensating for any irregularities of the seal G and having greater alignment between the lid 20 and the chamber 10. In the condition shown in Figure 3(c), the locking pin 26 is in the second engaged position thereof, in which the pin 26 comes into abutment with the bearing 63 that counteracts any displacements and ensures that the lid 20 is perfectly closed and remains so, even in the presence of internal pressure increases within the cooking chamber 10.

The cooperation between the locking pin 26 and the bearing 63 provides a sort of further safety of the closure of the cooking chamber 10.

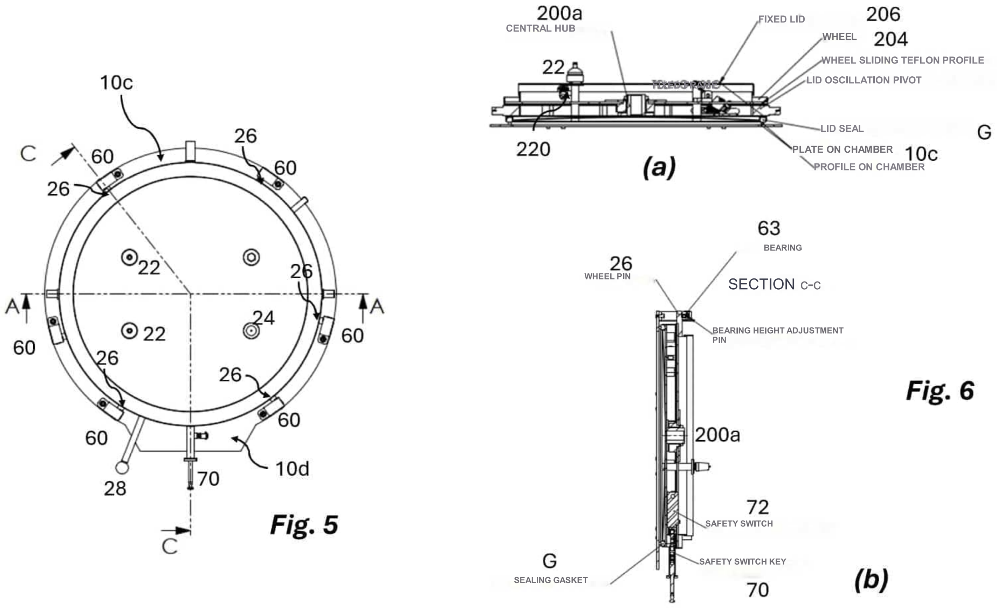

A key insertion lever 70 is also present on the lid 20 for a safety switch 72 (see the Figure 6). It serves to manually unlock the lid at zero pressure.

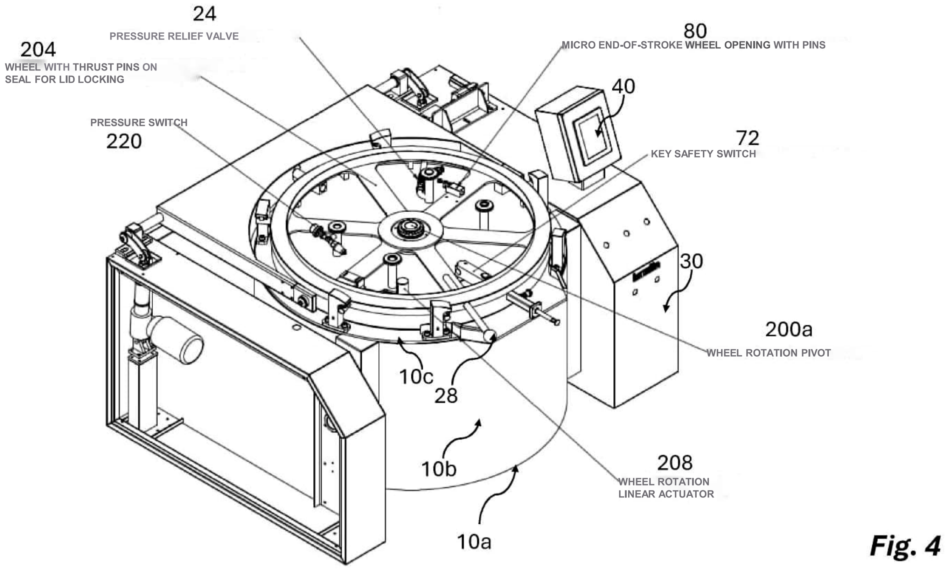

With reference to Figure 4, an end-of-stroke microcontroller 80 is shown marking the maximum rotation end-of-stroke of the wheel 204, which results in the opening of the chamber 10, completely releasing the lid 20 from the columns 60. In such condition (shown in Figure 3(a), the locking pins 26 are in the first free position thereof, spaced apart from the corresponding columns 60, and they leave the lid 20 free, which may be lifted and distanced from the chamber 10.

Furthermore, a pressure switch 220 may be provided, connected to the safety valves 22 for controlling the internal pressure.

In such a condition, the opening mechanism 34 may open the lid 20, which, being positioned with the locking pins 26 in the first free position thereof, spaced apart from the corresponding columns 60, may be lifted and pivot about the pivot point represented by the rotation axis 37 of the lifting arms 36 of the lid 20.

Conversely, in the closed condition, in which the locking pins 26 are in the second engaged position thereof, in contact with the corresponding columns 60, and retained by the respective bearings 63, the lid 20 cannot be opened and lifted by the opening mechanism 34, since the bearings 63 exert resistance and prevent the locking pins 26, and consequently the lid 20, from vertically lifting.

Figures 1 and 4 show the lid 20 in the engaged position, namely in the state shown in detail in Figure 3(c), in which the wheel 204 with the locking pins 26 is capable of imparting a thrust on the seal G in order to lock the lid 20.

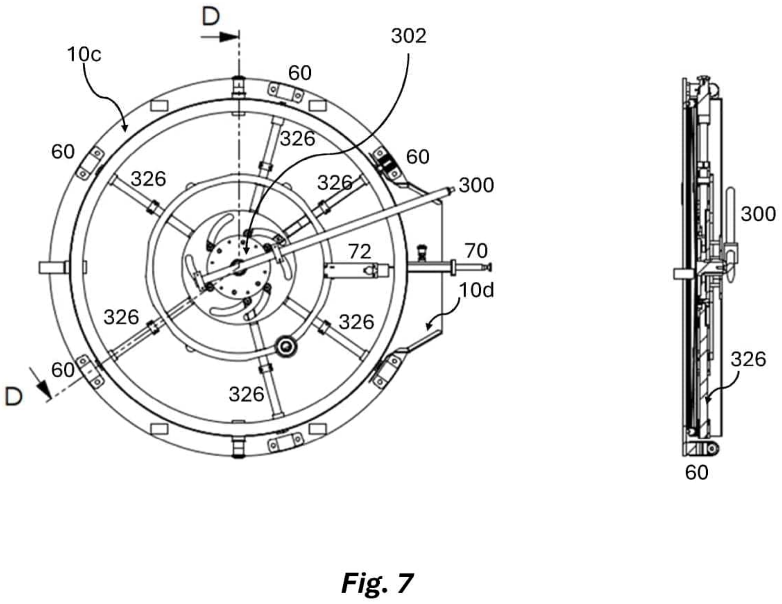

A second embodiment of the lid 20 is shown with reference to Figures 7, 8 and 9.

The similar and common elements between the two embodiments are not described again, focusing only on the distinguishing elements with respect to the first embodiment.

In this second case, the closing elements are actuated differently and have a linear movement instead of an angular movement, to move between the first free position and the second engaged position.

In this embodiment, a manual operation lever 300 of an actuation cam 302 of the locking pins 326 is present. In this case, the locking pins 326 are linearly movable between a first retracted position and a second engaged position, in which they interact with the bearings 63 provided on the columns 60.

The actuation cam 302 is a disc with a plurality of activation elements 302a that simultaneously move all the locking pins 326 between the first free retracted position thereof that does not protrude from the peripheral edge of the lid 20 and allows the lid 20 to open, as shown in Figure 9(a), and the second engaged position thereof, in which they protrude with respect to the peripheral edge of the lid 20 and cooperate with the bearings 63 provided on the columns 60 to prevent the lid 20 from opening, as shown in Figure 9(b).

Obviously, by operating the lever 300 in the opposite direction, the cam 302 brings all the locking pins 326 into the first free retracted position thereof again.

In this embodiment, the locking pins 326 are operated by the cam 302 which, by rotating, linearly moves all the locking pins 326 forward and brings them into the second engaged position.

In this case, the movement of the locking pins 326 is of the linear and not angular type, but the concept is the same.

In fact, when the locking pins 326 are in the retracted position thereof, the opening of the lid 20 is permitted, whereas, when they are in the extended, or engaged position thereof, they come into contact with the corresponding bearing 63 and keep the lid 20 closed.

The cam 302 is accommodated in a lid base 310 by means of a centering pin 310a, which also defines the axis A of the lid 20.

In this case, the first closing elements are movable pins 326, which come out from the lid 20 (manually or electrically operated by means of an actuator) by rotating a cam 302 that pushes the locking pins 326 outward, which are inserted into the columns 60 and provided with height adjustment, to adjust the thrust to be produced on the movable pin 326, which, in turn, pushes the entire lid 20 onto the chamber 10.

In particular, the safety closure system acts at multiple points on the seal G.

The lid 20 is made, for example, of stainless steel with an inner coating of non-stick material resistant to high temperatures and corrosion.

The seal G is made of high-temperature resistant silicone and ensures a tight seal of the chamber 10.

The safety closure system comprises a rotational locking mechanism of a movable portion 204 of the lid 20, in which first closing elements 26 are uniformly distributed along the edge of the lid and adapted to cooperate with respective second closing elements provided on the edge of the chamber 10.

The lid 20 is provided with at least one automatic pressure release valve 22 activated upon reaching a predetermined pressure level.

A second manual valve 24 allows the user to release the pressure in a controlled manner before opening the lid 20.

An electronic sensor may be present, which detects whether the lid 20 is properly closed and prevents the activation of the heating system until the closure is ensured. The materials used comply with international food regulations, ensuring a long product life.

The design is adapted to fit different-sized chambers, making the lid interchangeable.

The invention is ideal for use at home, in catering, and in the food industry, improving safety and efficiency of pressure cooking processes.

The proposed system has the purpose of increasing the pressure inside the cooking chamber and increasing the safety of the closure.

The above allows for a more uniform cooking, faster heat-up times, reduced cooking times and energy saving up to 70%.

The solution described herein provides a safety closure system with mechanical closing adjustments of the lid at multiple points, with the possibility of adjusting the compression force of the seal G at the closure points. This safety closure system allows compensating any planarity deviations of the plane of the chamber 10.

The lid opening and closing system is carried out by electric actuation and the lid is pivoted to the arm to allow the same to tilt for alignment with the chamber, even if the latter does not go back to being perfectly horizontal, for example, after an emptying or washing cycle.

As said, the lid 20 consists of a fixed part 200 that serves as base for the lid and supports the closing seal G, and as a wheel 204 that turns on a sliding profile 202 by means of an electric actuator 208.

The wheel 204 is centrally pivoted on a central pin 200a, and is free to rotate to perform small arcs of a circle.

Safety valves 22 and manual valves 24 are present on the outside of the lid, but connected to the interior of the chamber.

The rotary motion of the wheel 204 causes the pins 26 to insert beyond the bearing 63 placed on the adjustment turret or column 60, forcing the entire lid 20 downward and causing the seal G to adhere to the profile of the mouth of the chamber 10.

In the variant, the rotary motion of the actuation lever acting on the cam causes a linear movement of the pins 326, which are made to protrude beyond the bearing 63 placed on the adjustment turret or column 60, forcing the entire lid 20 downward and causing the seal G to adhere to the profile of the mouth of the chamber 10.

The above description of embodiments of the invention is capable of illustrating the invention from a conceptual point of view so that others, using the prior art, will be able to modify and/or adapt such specific embodiments in various applications without further research and without departing from the inventive concept and, therefore, it is intended that such adaptations and modifications will be considered equivalents of the specific embodiments.

The means and materials for achieving the various functions described may be varied, without thereby departing from the scope of the invention.

It is understood that the expressions or terminology used serve a purely descriptive purpose and, therefore, are not limiting.

Obviously, without prejudice to the principle of the invention, the constructional details and embodiments may widely vary with respect to what has been described and illustrated purely by way of example, without thereby departing from the scope of the present invention.

Where the constructional features and techniques mentioned in the following claims are followed by reference numerals or signs, such reference signs have been introduced with the sole objective of increasing the intelligibility of the claims and, consequently, have no limiting effect on the interpretation of each element identified, purely by way of example, by such reference signs.

## Claims

1. A safety closure system for a pressure-cooking chamber (10), comprising a cooking chamber (10), open at the top, a lid (20) engageable with the mouth of the cooking chamber (10) for the closing thereof and an annular seal (G) associated with said lid (20) to ensure a steam-tight seal between the cooking chamber (10) and the lid (20), wherein said safety closure system provides arranging a plurality of first closing elements (26) arranged on the lid and a corresponding plurality of second closing elements (63) arranged on the annular edge of the mouth of the cooking chamber (10), wherein said first closing elements (26) are movable between a first free position thereof, in which they are spaced apart from the second closing elements (63) and allow the lid (20) to be opened, and a second engaged position thereof, in which they cooperate with, and are held in position by said second closing elements (63), and wherein, when the first closing elements (26) are in the second engaged position thereof, said first closing elements (26) and said second closing elements (63) keep the lid in position on the cooking chamber (10) and compress the seal (G) compensating any planarity deviations between the cooking chamber (10) and the lid (20).

2. The safety closure system for a pressure-cooking chamber (10) according to claim 1, wherein said lid (20) has a layered structure and comprises a wheel (204) integrally supporting said first closing elements (26).

3. The safety closure system for a pressure-cooking chamber (10) according to claim 2, wherein said first closing elements (26) are locking pins (26) arranged so as to radially protrude from said wheel (204), and wherein said wheel (204) is configured to rotate with respect to the other fixed elements of the lid (20) to move said locking pins (26) between the first free position thereof, and the second engaged position thereof, and vice versa.

4. The safety closure system for a pressure-cooking chamber (10) according to claim 3, wherein said locking pins (26) radially extend outwards from the lid (20), from a circular crown (204a) of the wheel 204, and wherein the locking pins (26) are spaced apart from one another with an angular distance defined according to the diameter of the lid.

5. The safety closure system for a pressure-cooking chamber (10) according to claim 3 or claim 4, wherein said lid (20) comprises a circular crown (202) defining a sliding profile that facilitates the rotation of the wheel (204), reducing friction during the rotation of the wheel (204).

6. The safety closure system for a pressure-cooking chamber (10) according to claim 1, wherein said lid (20) has a layered structure and comprises a cam (302) operated by an actuation lever (300), which moves said first closing elements (326) between the first free position thereof, and the second engaged position thereof, and vice versa.

7. The safety closure system for a pressure-cooking chamber (10) according to claim 6, wherein said first closing elements (326) are locking pins (326) that can be moved linearly by means of said cam (302) between the first free position thereof and the second engaged position thereof, and vice versa.

8. The safety closure system for a pressure-cooking chamber (10) according to claim 7, wherein said locking pins (326) are linearly movable between the first free position, in which said locking pins (326) are retracted and do not protrude from the lid (20), and a second engaged position, in which they interact with said second closing elements (63) arranged on the annular edge of the mouth of the cooking chamber (10) and prevent the lid (20) from opening.

9. The safety closure system for a pressure-cooking chamber (10) according to any one of the preceding claims, wherein said second closing elements (63) arranged on the annular edge of the mouth of the cooking chamber (10) are bearings (63) mounted on pressure adjustment columns (60).

10. The safety closure system for a pressure-cooking chamber (10) according to claim 9, wherein said bearings (63) are adapted to keep said first closing elements (26) in the engaged position thereof and prevent the lid (20) from opening.
